# EUROPEAN PATENT SPECIFICATION

(11) **EP 1 795 015 B1**
(45) Date of publication and mention of the grant of the patent: **16.03.2016**
(21) Application number: 05814899.0
(22) Date of filing: 28.09.2005
(51) Int. Cl.: H04N 19/176

(54) **METHOD AND APPARATUS FOR REDUCED RESOLUTION UPDATE VIDEO CODING AND DECODING**
VERFAHREN UND VORRICHTUNG ZUR VIDEOKODIERUNG UND DEKODIERUNG MIT REDUZIERTER AUFLÖSUNGSAKTUALISIERUNG
PROCEDE ET DISPOSITIF DE CODAGE ET DE DECODAGE VIDEO A MODE DE RAFRAICHISSEMENT A RESOLUTION REDUITE

(30) Priority: 29.09.2004 US 614075 P
(43) Date of publication of application: 13.06.2007
(73) Proprietor: Thomson Research Funding Corporation, Indianapolis, IN 46290 (US)
(72) Inventor: COMER, Mary, Lafuze, Fairmount, IN 46928 (US)
(74) Representative: Hartnack, Wolfgang
(86) International application number: PCT/US2005/034969
(87) International publication number: WO 2006/039382

(56) References cited:
- EP-A- 0 838 955
- EP-A- 1 248 468
- EP-A- 1 401 211
- US-A1- 2002 186 890
- "Recommendation H.263: Video coding for low bit rate communication" ITU-T DRAFT RECOMMENDATION H.263, February 1998 (1998-02), pages 1-167, XP002176560 cited in the application
- COMER M L: "Reduced Resolution Update Video Coding with Interblock Filtering of Prediction Error Residuals" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, 11 September 2005 (2005-09-11), pages 61-64, XP010851396 ISBN: 0-7803-9134-9
- TOURAPIS A M ET AL: "New Results on Reduced Resolution Update Mode" ITU-T VIDEO CODING EXPERTS GROUP (ITU-T SG16 Q.6) 12TH MEETING REDMOND WASHINGTON USA, VCEG-W04, 19 July 2004 (2004-07-19), pages 1-12, XP002363149
- TOURAPIS A M ET AL: "Reduced Resolution Update Mode for Advanced Video Coding" ITU-T VIDEO CODING EXPERTS GROUP (ITU-T SG16 Q.6), 22ND MEETING: MUNICH, VCEG-V05, 15 March 2004 (2004-03-15), pages 1-9, XP002363150

## Description

### FIELD OF THE INVENTION

The present invention generally relates to video coding and decoding and, more particularly, to a method and apparatus for Reduced Resolution Update (RRU) video encoding and decoding with filtering across block boundaries.

### BACKGROUND OF THE INVENTION

Reduced resolution update (RRU) is a video coding tool that allows an encoder to maintain a high frame rate during heavy motion by encoding a low-resolution update to a higher resolution picture while maintaining high resolution in stationary areas. In RRU mode, prediction error residuals are coded at a reduced spatial resolution instead of full resolution. In RRU mode, a block is downsampled and interpolated during coding without reference to any of its neighboring blocks. This can lead to severe blockiness in the decoded picture.

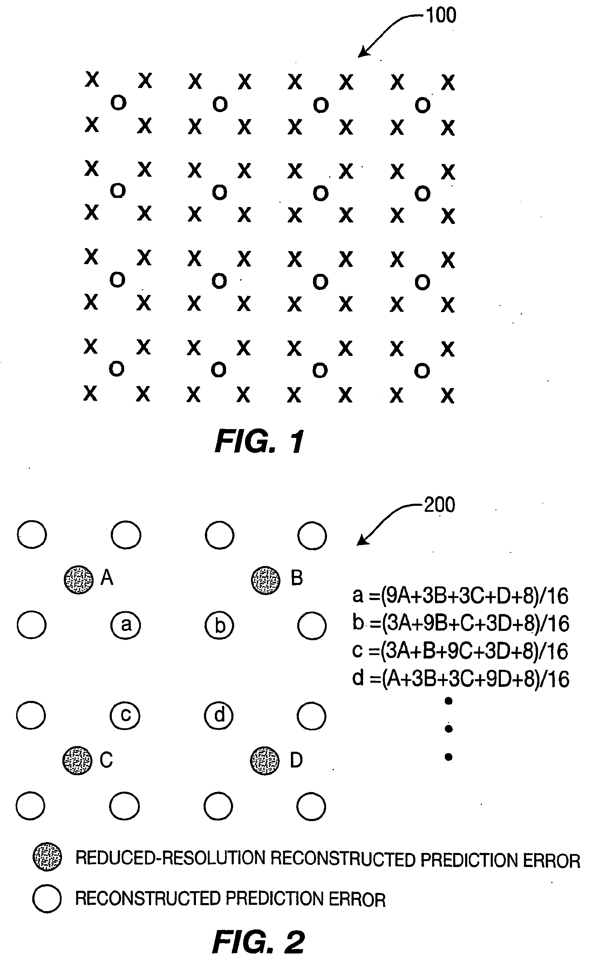

Conventional RRU processes each 8x8 block of prediction error residuals without using any data from outside the block. The spatial positioning of the reduced resolution samples, relative to the full resolution samples, is shown in FIG. 1 for conventional RRU. The low resolution residuals (denoted by **O**) are computed from the high-resolution residuals (denoted by **X**), coded, reconstructed, and then interpolated and added to the prediction block to obtain the decoded block. The first and last row and column are extrapolated instead of interpolated because there are no samples outside of the block to be used. This can contribute to blockiness.

In conventional RRU as defined in the H.263 Standard, downsampling is performed by the encoder and is, hence, not defined by the standard. Consequently, while an illustrative example of RRU downsampling is described immediately hereinafter, it is to be appreciated that other downsampling schemes may also be employed in conventional RRU.

Turning to FIG. 2, an interpolation scheme for H.263 RRU is indicated generally by the reference numeral 200. The interpolation scheme 200 is for the pixels inside the image block, where all of the samples needed to do the interpolation are available.

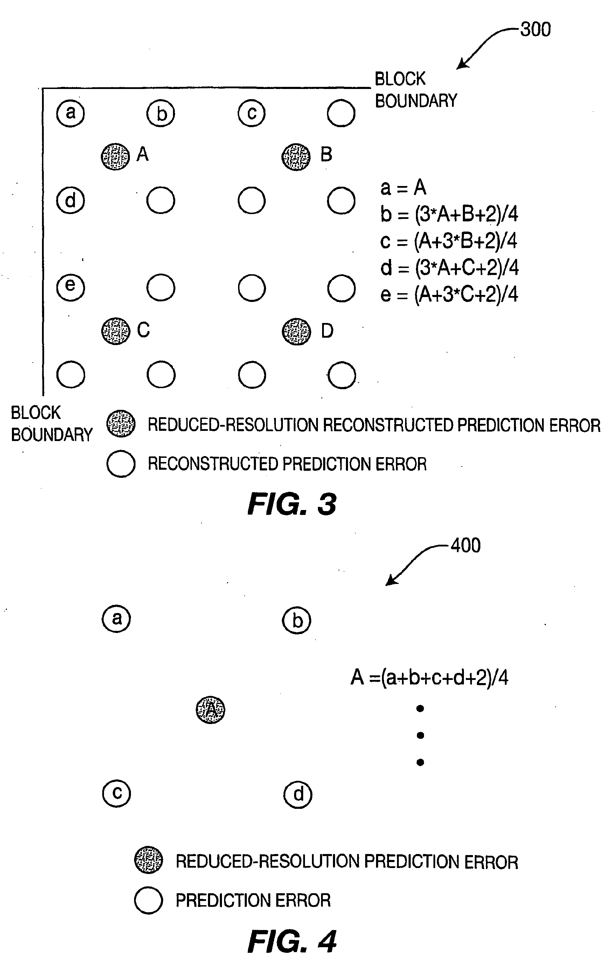

Turning to FIG. 3, an interpolation scheme for block boundary pixels, where extrapolation must be performed, is indicated generally by the reference numeral 300. The extrapolation must be performed for the block boundary pixels because the data outside of the block is not available.

Turning to FIG. 4, an exemplary RRU downsampling scheme is indicated generally by the reference numeral 400. In this example, each reduced resolution sample is obtained as a weighted average of four full resolution samples.

A method that has been used to reduce blockiness when utilizing RRU is to strengthen the deblocking filter that is applied after a frame is decoded. The disadvantage of this method is that it provides more smoothing not only to the prediction error residuals, where extra smoothing is needed, but also to the prediction that is added to the residuals before the deblocking filter to reconstruct the block. This means that there will be some unnecessary loss of detail in the prediction block, since the deblocking filter is a low pass filter.

Accordingly, it would be desirable and highly advantageous to have a method and apparatus for Reduced Resolution Update (RRU) video encoding and decoding that overcomes the above-identified problems of the prior art.

### SUMMARY OF THE INVENTION

These and other drawbacks and disadvantages of the prior art are addressed by the present invention, which is directed to a method and apparatus for Reduced-Resolution Update (RRU) video encoding and decoding with filtering across block boundaries.

According to an aspect of the present invention, there is provided an encoder for encoding video signal data for an image block. The encoder includes a Reduced-Resolution Update (RRU) downsampler for downsampling a full resolution prediction residual using data from at least one neighboring image block to form a low resolution downsampled prediction residual for the image block.

According to another aspect of the present invention, there is provided an encoder for encoding video signal data for an image block. The encoder includes an RRU interpolator for interpolating a coded prediction residual using data from at least one neighboring image block to form a coded interpolated prediction residual for the image block.

According to yet another aspect of the present invention, there is provided a decoder for decoding video signal data for an image block. The decoder includes a filter for filtering a prediction residual of the image block without filtering a prediction that is added to the prediction residual to reconstruct the image block.

According to still another aspect of the present invention, there is provided a method for encoding video signal data for an image block. The method includes the step of performing a Reduced-Resolution Update (RRU) downsampling step to downsample a full resolution prediction residual using data from at least one neighboring image block to form a low resolution downsampled prediction residual for the image block.

According to a further aspect of the present invention, there is provided a method for encoding video signal data for an image block. The method includes the step of performing an RRU interpolating step to interpolate a coded prediction residual using data from at least one neighboring image block to form a coded interpolated prediction residual for the image block.

According to a yet further aspect of the present invention, there is provided a method-for decoding video signal data for an image block. The method includes the step of filtering a prediction residual of the image block without filtering a prediction that is added to the prediction residual to reconstruct the image block.

These and other aspects, features and advantages of the present invention will become apparent from the following detailed description of exemplary embodiments, which is to be read in connection with the accompanying drawings.

### BRIEF DESCRIPTION OF THE DRAWINGS

The present invention may be better understood in accordance with the following exemplary figures, in which:
FIG. 1 shows the spatial positioning of reduced resolution samples utilizing a conventional Reduced Resolution Update (RRU) tool;
FIG. 2 shows an interpolation scheme for H.263 RRU;
FIG. 3 shows an interpolation scheme for block boundary pixels;
FIG. 4 shows an exemplary RRU downsampling scheme;
FIG. 5 shows a block diagram of a video encoder in accordance with the principles of the present invention;
FIG. 6 shows a block diagram of a video decoder in accordance with the principles of the present invention;
FIG. 7 shows a flow diagram of a video encoding method using a novel Reduced Resolution Update (RRU) technique and filtering across block boundaries in accordance with the principles of the present invention;
FIG. 8 shows a flow diagram of a video decoding method using a novel Reduced Resolution Update (RRU) technique and filtering across block boundaries in accordance with the principles of the present invention;
FIG. 9 shows the spatial positioning of reduced resolution samples utilizing the new RRU tool, in accordance with the principles of the present invention;
FIG. 10 shows an exemplary interpolation scheme for RRU+ in accordance with the principles of the present invention;
FIG. 11 shows an exemplary downsampling scheme for RRU+ in accordance with the principles of the present invention;
FIG. 12 shows a first table of values including average bitrate and luma PSNR for a first test sequence and a range of QP values, in accordance with the principles of the present invention; and
FIG. 13 shows a second table of values including average bitrate and luma PSNR for a second test sequence and a range of QP values, in accordance with the principles of the present invention.

### DETAILED DESCRIPTION

The present invention is directed to a method and apparatus for Reduced-Resolution Update (RRU) video encoding and decoding with filtering across block boundaries. In accordance with an embodiment of the present invention, an apparatus and method are disclosed in which downsampling and interpolation filters use residuals from neighboring blocks to prevent the blockiness that results from utilizing conventional RRU, which does not use interblock filtering. Accordingly, the present invention greatly reduces undesirable blockiness without applying excessive loop filtering/smoothing. It is to be appreciated that the new approach described herein is referred to as "RRU+".

The present description illustrates the principles of the present invention. It will thus be appreciated that those skilled in the art will be able to devise various arrangements that, although not explicitly described or shown herein, embody the principles of the invention and are included within its spirit and scope.

All examples and conditional language recited herein are intended for pedagogical purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. It is thus regarded that any means that can provide those functionalities are equivalent to those shown herein.

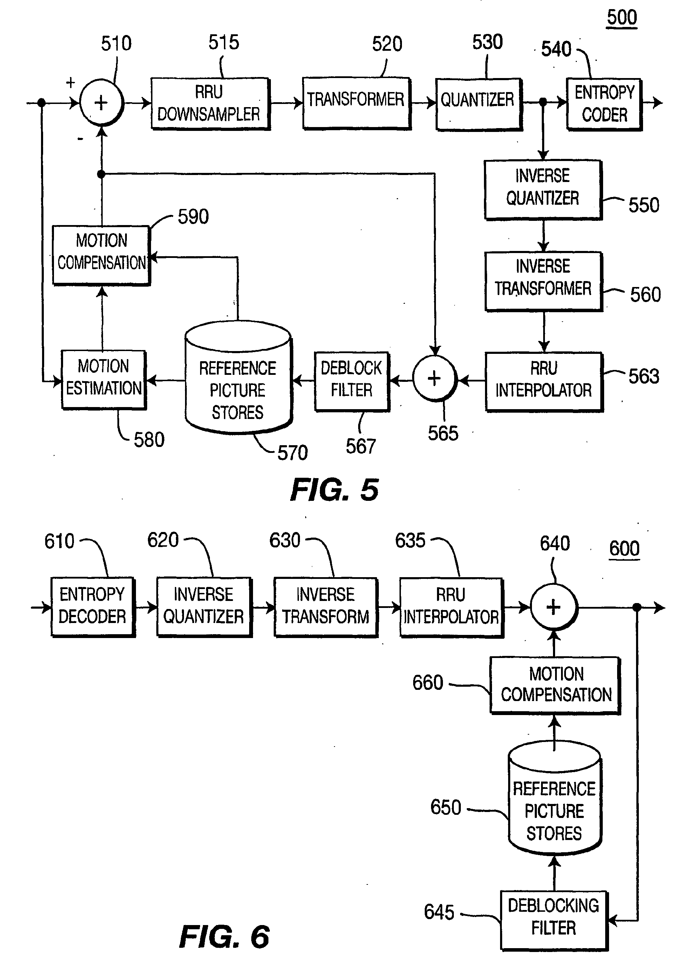

Turning to FIG. 5, a video encoder is indicated generally by the reference numeral 500. An input to the encoder 500 is connected in signal communication with a non-inverting input of a summing junction 510. The output of the summing junction 510 is connected in signal communication with an RRU downsampling unit 515. The output of the RRU downsampling unit 515 is connected in signal communication with a block transformer 520. The transformer 520 is connected in signal communication with a quantizer 530. The output of the quantizer 530 is connected in signal communication with an entropy coder 540, where the output of the entropy coder 540 is an externally available output of the encoder 500.

The output of the quantizer 530 is further connected in signal communication with an inverse quantizer 550. The inverse quantizer 550 is connected in signal communication with an inverse block transformer 560, which, in turn, is connected in signal communication with an RRU interpolator 563. The RRU interpolator 563 is connected in signal communication with the first input of a summing junction 565. The output of summing junction 565 is connected in signal communication with a deblocking filter 567, which in turn is connected in signal communication with reference picture store 570. A first output of the reference picture store 570 is connected in signal communication with a first input of a motion estimator 580. The input to the encoder 500 is further connected in signal communication with a second input of the motion estimator 580. The output of the motion estimator 580 is connected in signal communication with a first input of a motion compensator 590. A second output of the reference picture store 570 is connected in signal communication with a second input of the motion compensator 590. The output of the motion compensator 590 is connected in signal communication with an inverting input of the summing junction 510. The output of the motion compensator 590 is also connected in signal communication with a second input of the summing junction 565.

Turning to Figure 6, a video decoder is indicated generally by the reference numeral 600. The video decoder 600 includes an entropy decoder 610 connected in signal communication with an inverse quantizer 620. The inverse quantizer 620 is connected in signal communication with an inverse transformer 630. The inverse transform is connected in signal communication with an RRU interpolator 635, which in turn is connected with a first input terminal of an adder or summing junction 640, where the output of the summing junction 640 provides the output of the video decoder 600. The output of the summing junction 640 is connected in signal communication with a deblocking filter 645, which in turn is connected in signal communication with reference picture store 650. The reference picture store 650 is connected in signal communication with a motion compensator 660, which is connected in signal communication with a second input terminal of the summing junction 640.

In accordance with the principles of the present invention, referred to herein generally as RRU+, and in contrast to the prior art, the downsampling and interpolation filters use residuals from neighboring blocks to prevent the blockiness that results from RRU. Moreover, in contrast to the prior art, the present invention uses interblock filtering only on the residuals.

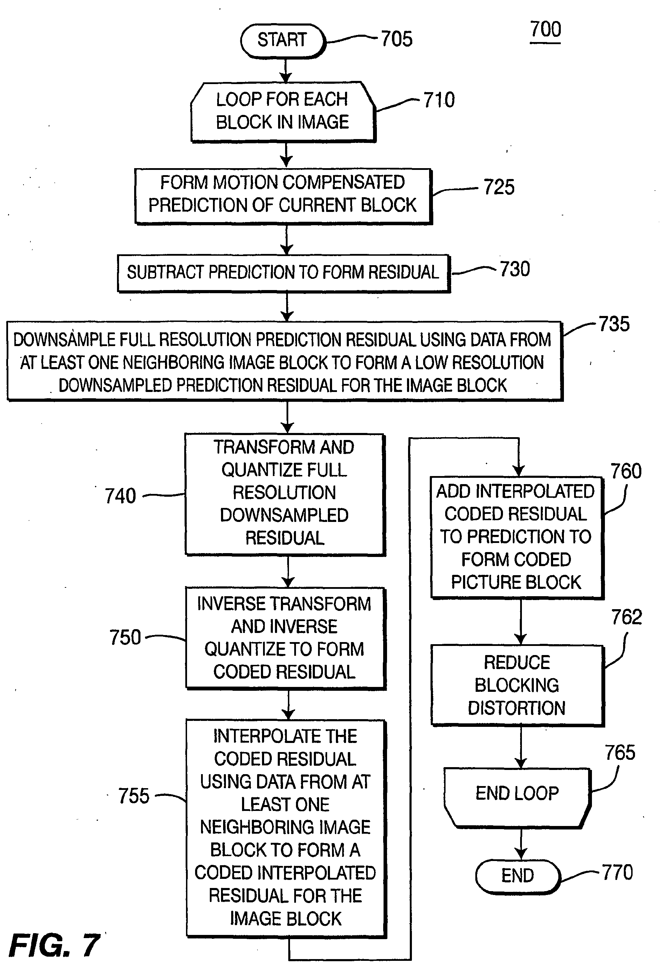

Turning to FIG. 7, an exemplary video encoding method using a novel Reduced Resolution Update (RRU) technique and filtering across block boundaries is indicated generally by the reference numeral 700. The method 700 includes a start block 705 that passes control to a loop limit block 710. The loop limit block 710 passes control to a function block 725. The function block 725 forms a motion compensated prediction of the current input block, and then passes control to the function block 730. The function block 730 subtracts the prediction of the current input block from the current input block to form a full resolution prediction residual, and then passes control to a function block 735. The function block 735 downsamples the full resolution prediction residual using data from at least one neighboring image block to form a low resolution downsampled prediction residual for the image block, and then passes control to a function block 740. The function block 740 transforms and quantizes the low resolution downsampled prediction residual, and then passes control to a function block 750. The function block 750 inverse transforms and inverse quantizes the prediction residual to form a coded prediction residual, and then passes control to a function block 755. The function block 755 interpolates the coded prediction residual using data from at least one neighboring image block to form a coded interpolated residual for the image block, and then passes control to a function block 760. The function block 760 adds the interpolated coded prediction residual to the prediction for the current input block to form a coded picture block, and then passes control to a function block 762. The function block 762 performs deblocking filtering to reduce blocking distortion, and passes control to a loop limit block 765. The loop limit block passes control to an end block 770.

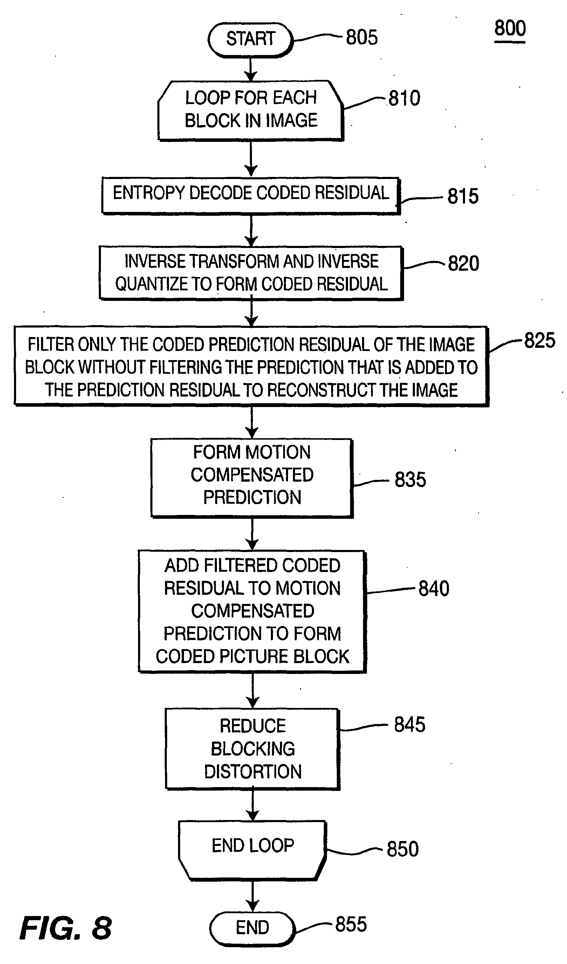

Turning to FIG. 8, an exemplary video decoding method using a novel Reduced Resolution Update (RRU) technique and filtering across block boundaries is indicated generally by the reference numeral 800. The method 800 includes a start block 805 that passes control to a loop limit block 810. The loop limit block 810 passes control to a function block 815, which entropy decodes a coded prediction residual bitstream, and then passes control to a function block 820. The function block 820 inverse transforms and inverse quantizes the prediction residual to form a coded prediction residual, and then passes control to a function block 825. The function block 825 filters only the coded prediction residual of the image block without filtering the prediction that is added to the prediction residual to reconstruct the image, and then passes control to a function block 835. The function block 835 forms a motion compensated prediction of the current input block, and then passes control to a function block 840. The function block 840 adds the filtered coded prediction residual to the motion compensated prediction of the current input block to form a coded picture block, and then passes control to a function block 845. The function block 845 performs deblocking filtering to reduce blocking distortion, and passes control to a loop limit block 850. The loop limit block 850 passes control to an end block 855.

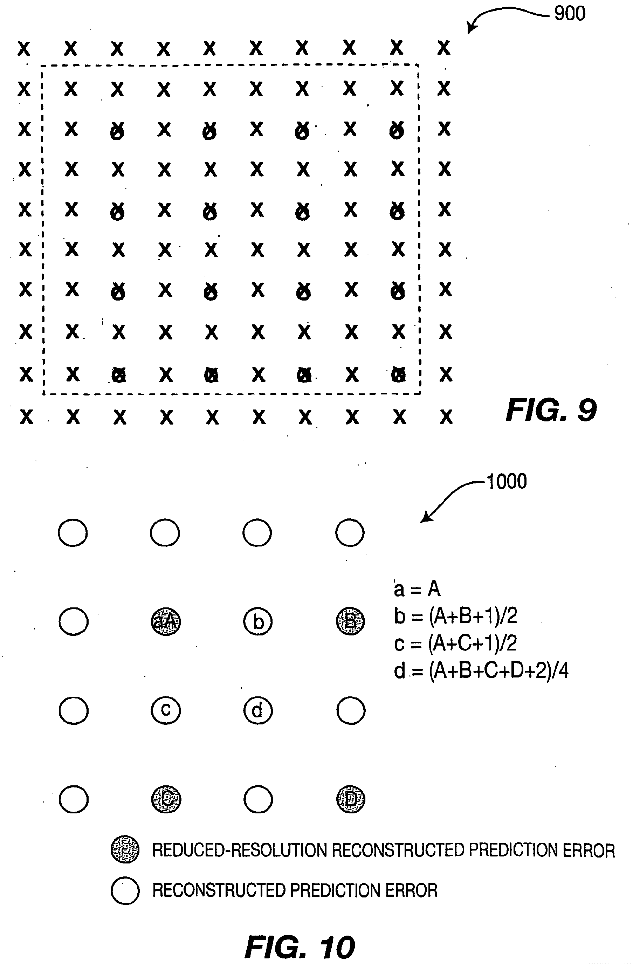

Turning to FIG. 9, the spatial positioning of samples in accordance with the principles of the present invention is indicated generally by the reference numeral 900. Here, the reduced resolution samples are co-located with every other full resolution sample. The dashed line shows the boundaries of the current block. Pixels outside the dashed line are from neighboring blocks. To do the downsampling a 10x10 prediction block is subtracted from a 10x10 block of original pixels, then that difference is downsampled to a 4x4 block. For the interpolation, the reconstructed pixels to the left and top of the current block are used, since the original pixels are not available in the decoder. Note that if the interpolation filter used is {1,2,1}/2, then no pixels to the right or bottom of the current block are needed. This is important, because the interpolation must be done in the decoder and the blocks to the right and bottom of the current block would not have been decoded yet for use in the interpolation.

For purposes of comparison, RRU and RRU+ have been implemented in an H.264 software codec. Results comparing RRU, RRU+ and H.264 without RRU (Non-RRU) are presented for a first and a second test sequence. For the RRU and RRU+ coding, only B pictures were coded using reduced resolution residuals.

Turning to FIG. 10, an exemplary interpolation scheme for RRU+ is indicated generally by the reference numeral 1000. The interpolation scheme 1000, in contrast to conventional RRU, uses samples from neighboring blocks. Since an extra row and column are available outside the block with RRU+, the pixels a, b, c, and d will always have the samples required for interpolation as shown in FIG. 4. It is to be appreciated that the present invention is not limited to the filter coefficients shown in FIG. 10 and, thus, other filter coefficients may also be employed in accordance with the principles of the present invention, while maintaining the scope of the present invention.

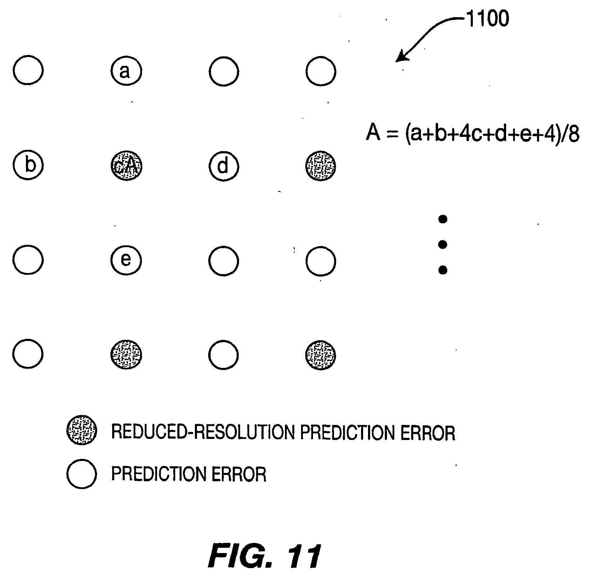

Turning to FIG. 11, an exemplary downsampling scheme for RRU+ is indicated generally by the reference numeral 1100. It is to be appreciated that the present invention is not limited to the filter coefficients shown in FIG. 11 and, thus, other filter coefficients may also be employed in accordance with the principles of the present invention, while maintaining the scope of the present invention.

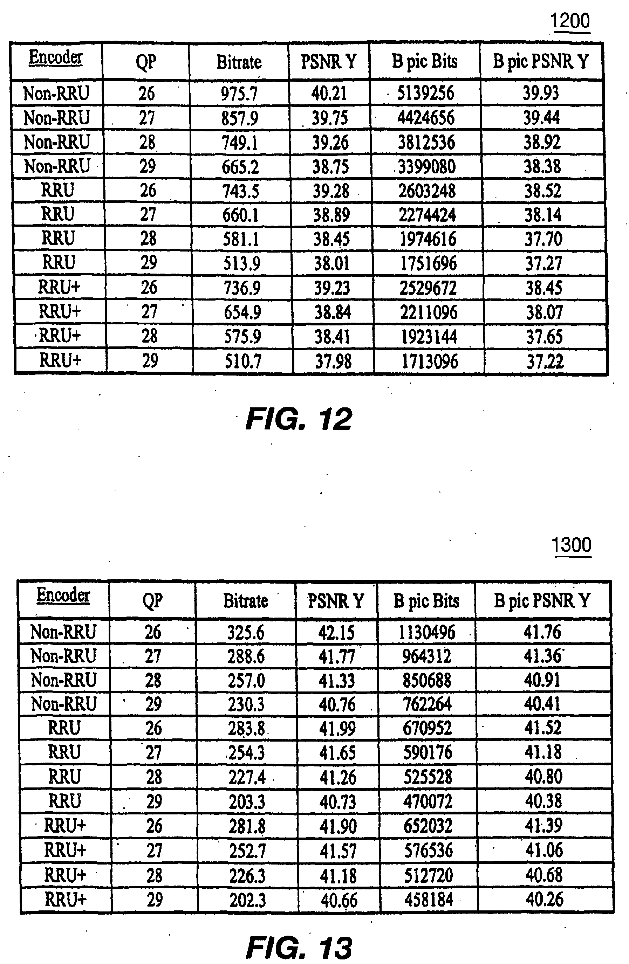

Turning to FIGs. 12 and 13, a first and a second table showing average bitrate and luma PSNR for two test sequences for a range of QP values are indicated generally by the reference numerals 1200 and 1300, respectively. For all experiments, QPI = QPP = QP and QPB = QP+1. The last two columns in each table show the total number of bits used and the average luma PSNR for B pictures only, since the RRU was used only for B pictures. Subjectively, there is in general a marked reduction in severe blocking artifacts using RRU+ compared to RRU for both test sequences.

These and other features and advantages of the present invention may be readily ascertained by one of ordinary skill in the pertinent art based on the teachings herein. It is to be understood that the teachings of the present invention may be implemented in various forms of hardware, software, firmware, special purpose processors, or combinations thereof.

Most preferably, the teachings of the present invention are implemented as a combination of hardware and software. Moreover, the software is preferably implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ,("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present invention is programmed. Given the teachings herein, one of ordinary skill in the pertinent art will be able to contemplate these and similar implementations or configurations of the present invention.

Although the illustrative embodiments have been described herein with reference to the accompanying drawings, it is to be understood that the present invention is not limited to those precise embodiments, and that various changes and modifications may be effected therein by one of ordinary skill in the pertinent art without departing from the scope of the present invention. All such changes and modifications are intended to be included within the scope of the present invention as set forth in the appended claims.

## Claims

1. An apparatus for encoding video signal data for an image block, comprising a reduced resolution update downsampler (515),
wherein said reduced resolution update downsampler (515) downsamples a full resolution prediction residual using data from at least one neighboring image block to form a low resolution downsampled prediction residual for the image block.

2. The apparatus according to claim 1, further comprising an reduced resolution update interpolator (563),
wherein said reduced resolution update interpolator (563) interpolates a coded low resolution prediction residual using data from at least one neighboring image block to form a coded interpolated prediction residual for the image block.

3. The apparatus according to claim 2, wherein said reduced resolution update interpolator (563) uses reconstructed pixels of the top and left portion of the image block for the interpolating.

4. The apparatus according to claim 2, wherein said reduced resolution update interpolator (563) interpolates without use of reconstructed pixels to the right and bottom of the image block.

5. The apparatus according to claim 2, further comprising a deblocking filter (567) for reducing blocking distortion in a reconstructed version of the image block,
wherein the deblocking filter is used at a strength that is less than a maximum deblocking strength.

6. An apparatus for encoding video signal data for an image block, comprising a reduced resolution update interpolator (563) for interpolating a coded low resolution prediction residual using data from at least one neighboring image block to form a coded interpolated prediction residual for the image block wherein some of the coded interpolated prediction residuals are spatially aligned with some of the coded low resolution prediction residuals.

7. The apparatus according to claim 6, wherein said reduced resolution update interpolator (563) uses reconstructed pixels of the top and left portion of the image block for the interpolating.

8. The apparatus according to claim 6, wherein said reduced resolution update interpolator (563) interpolates without use of reconstructed pixels to the right and bottom of the image block.

9. The apparatus according to claim 6, further comprising a deblocking filter (567) for reducing blocking distortion in a reconstructed version of the image block,
wherein the deblocking filter is used at a strength that is less than a maximum deblocking strength.

10. An apparatus for decoding video signal data for an image block, comprising a reduced resolution update interpolator (635) for filtering a low resolution downsampled prediction residual of the image block, formed by downsampling a full resolution prediction residual using data from at least one neighboring image block to form a filtered prediction residual, without filtering a prediction that is added to the filtered prediction residual to reconstruct the image block.

11. The apparatus according to claim 10, further comprising a deblocking filter (645) for reducing blocking distortion in a reconstructed version of the image block, wherein the deblocking filter is used at a strength that is less than a maximum deblocking strength.

12. A method for encoding video signal data for an image block, comprising the step of performing a reduced resolution update downsampling (735) to downsample a full resolution prediction residual using data from at least one neighboring image block to form a low resolution downsampled prediction residual for the image block.

13. The method according to claim 12, further comprising the step of performing a reduced resolution update interpolation step (755) to interpolate a coded prediction residual using data from at least one other neighboring image block to form a coded interpolated prediction residual for the image block.

14. The method according to claim 13, wherein said reduced resolution update interpolation step (755) uses reconstructed pixels of the top and left of the image block for the interpolating.

15. The method according to claim 13, wherein said reduced resolution update interpolation step (755) performs the interpolating without use of reconstructed pixels to the right and bottom of the image block.

16. The method according to claim 12, further comprising the step of reducing (762) blocking distortion in a reconstructed version of the image block using a deblocking filter,
wherein the deblocking filter is used at a strength that is less than a maximum deblocking strength.

17. A method for encoding video signal data for an image block, comprising the step of performing an reduced resolution update interpolation (755), to interpolate a coded prediction residual using data from at least one neighboring image block to form a coded interpolated prediction residual for the image block wherein some of the coded interpolated prediction residuals are spatially aligned with some of the coded low resolution prediction residuals.

18. The method according to claim 17, further comprising the step of reducing (762) blocking distortion in a reconstructed version of the image block using a deblocking filter,
wherein the deblocking filter is used at a strength that is less than a maximum deblocking strength.

19. A method for decoding video signal data for an image block, comprising the step of filtering a low resolution downsampled prediction residual of the image block, formed by downsampling a full resolution prediction residual using data from at least one neighboring image block to form a filtered prediction residual, without filtering a prediction that is added to the filtered prediction residual to reconstruct the image block.

20. The method according to claim 19, further comprising the step of reducing (762) blocking distortion in a reconstructed version of the image block using a deblocking filter, wherein the deblocking filter is used at a strength that is less than a maximum deblocking strength.

21. A video signal structure for an encoded image block comprising a low resolution prediction residual of the image block downsampled from a full resolution prediction residual using data from at least one neighboring image block.

## Patentansprüche

1. Vorrichtung zur Kodierung von Videosignaldaten für einen Bildblock, umfassend einen Abtastwertverminderer (515) zur Verminderung der Auflösungsaktualisierung, wobei der Abtastwertverminderer (515) zur Verminderung der Auflösungsaktualisierung die Abtastwerte eines vollen Auflösungsvorhersagerestes unter Verwendung von Daten, aus wenigstens einem benachbarten Bildblock vermindert, um einen hinsichtlich der Abtastwerte verminderten Vorhersagerest mit niedriger Auflösung für den Bildblock zu bilden.

2. Vorrichtung nach Anspruch 1, die ferner einen Interpolator (563) mit verminderter Auflösungsaktualisierung umfasst, wobei der Interpolator (563) mit verminderter Auflösungsaktualisierung einen kodierten Vorhersagerest mit niedriger Auflösung unter Verwendung von Daten aus wenigstens einem benachbarten Bildblock interpoliert, um einen kodierten interpolierten Vorhersagerest für den Bildblock zu bilden.

3. Vorrichtung nach Anspruch 2, bei der der Interpolator (563) mit verminderter Auflösungsaktualisierung rekonstruierte Pixel des oberen und linken Teils von dem Bildblock für die Interpolation verwendet.

4. Vorrichtung nach Anspruch 2, bei der Interpolator (563) mit verminderter Auflösung ohne Verwendung von rekonstruierten Pixeln rechts und unten in dem Bildblock interpoliert.

5. Vorrichtung nach Anspruch 2, die ferner ein Entblockungsfilter (567) zur Verminderung von blockierenden Verzerrungen einer rekonstruierten Version des Bildblocks umfasst, wobei das Entblockungsfilter mit einer Stärke verwendet wird, die kleiner ist als eine maximale Entblockungsstärke.

6. Vorrichtung zum Kodieren von Videosignaldaten für einen Bildblock, umfassend einen Interpolator (563) mit verminderter Auflösungsaktualisierung zum Interpolieren eines kodierten Vorhersagerestes mit geringer Auflösung unter Verwendung von Daten aus wenigstens einem benachbarten Bildblock, um einen kodierten, interpolierten Vorhersagerest für den Bildblock zu bilden, wobei einige der kodierten interpolierten Vorhersagereste räumlich mit einigen der kodierten Vorhersagereste mit niedriger Auflösung ausgerichtet sind.

7. Vorrichtung nach Anspruch 6, bei der der Interpolator (563) mit verminderter Auflösungsaktualisierung rekonstruierte Pixel des oberen und linken Teils des Bildblocks für die Interpolation verwendet.

8. Vorrichtung nach Anspruch 6, bei der der Interpolator (563) mit verminderter Auflösungsaktualisierung ohne Verwendung von rekonstruierten Pixeln des rechten und unteren Bildblocks interpoliert.

9. Vorrichtung nach Anspruch 6, die ferner ein Entblockungsfilter (567) zur Verminderung von blockierender Verzerrung in einer rekonstruierten Version des Bildblocks umfasst, wobei das Entblockungsfilter mit einer Stärke verwendet wird, die kleiner ist als eine maximale Entblockungsstärke.

10. Vorrichtung zum Dekodieren von Videosignaldaten eines Bildblocks, umfassend einen Interpolator (635) mit verminderter Auflösungsaktualisierung zum Filtern eines hinsichtlich der Abtastwertes verminderten Vorhersagerestes des Bildblocks mit niedriger Auflösung, gebildet durch Abtastwertverminderung eines Vorhersagerestes mit voller Auflösungsvorhersage unter Verwendung von Daten aus mindestens einem benachbarten Bildblock, um einen gefilterten Vorhersagerest zu bilden ohne Filterung einer Vorhersage, die dem gefilterten Vorhersagerest hinzugefügt wird, um den Bildblock zu rekonstruieren.

11. Vorrichtung nach Anspruch 10, die ferner ein Entblockungsfilter (645) zur Verminderung von blockierender Verzerrung in einer rekonstruierten Version des Bildblocks unfasst, wobei das Entblockungsfilter mit einer Stärke verwendet wird, die kleiner ist als eine maximale Entblockungsstärke.

12. Verfahren zum Kodieren von Videosignaldaten für einen Bildblock, umfassend den Schritt der Ausführung einer Abtastwertverminderung (735) mit verminderter Auflösungsaktualisierung, um einen Vorhersagerest mit voller Auflösung unter Verwendung von Daten aus wenigstens einem benachbarten Bildblock im Abtastwert zu vermindern, um einen im Abtastwert verminderten Vorhersagerest.mit niedriger Auflösung für den Bildblock zu bilden.

13. Verfahren nach Anspruch 12, ferner umfassend den Schritt zur Ausführung einer Interpolation (755) mit verminderter Auflösungsaktualisierung, um einen kodierten Vorhersagerest unter Verwendung von Daten aus wenigstens einem anderen benachbarten Bildblock zu interpolierten, um einen kodierten interpolierten Vorhersagerest für den Bildblock zu bilden.

14. Verfahren nach Anspruch 13, bei dem der Interpolationsschritt (755) mit verminderter Auflösungsaktualisierung rekonstruierte Pixel von oben links und von unten in dem Bildblock für die Interpolation verwendet.

15. Verfahren nach Anspruch 13, bei dem der Interpolationsschritt (755) mit verminderter Auflösungsaktualisierung die Interpolation ohne Verwendung von rekonstruierten Pixeln rechts und unten von dem Bildblock ausgeführt wird.

16. Verfahren nach Anspruch 12, das ferner den Schritt umfasst, blockierende Verzerrung in einer rekonstruierten Version des Bildblocks unter Verwendung eines Entblockungsfilters zu vermindern (762), wobei das Entblockungsfilter mit einer Stärke verwendet wird, die kleiner als eine maximale Entblockungsstärke ist.

17. Verfahren zum Kodieren von Videosignaldaten für einen Bildblock, umfassend den Schritt der Ausführung einer Interpolation mit verminderter Auflösungsaktualisierung (755), um einen kodierten Vorhersagerest unter Verwendung von Daten aus wenigstens einem benachbarten Bildblock zu interpolieren, um einen kodierten interpolierten Vorhersagerest für den Bildblock zu bilden, wobei einige der kodierten interpolierten Vorhersagereste räumlich mit einigen der kodierten Vorhersagereste mit niedriger Auflösung ausgerichtet sind.

18. Verfahren nach Anspruch 17, das ferner den Schritt umfasst, eine blockierende Verzerrung in einer rekonstruierten Version des Bildblocks unter Verwendung eines Entblockungsfilters zu vermindern (762), wobei das. Entblockungsfilter mit einer Stärke verwendet wird, die kleiner ist als eine maximale Entblockungsstärke.

19. Verfahren zum Dekodieren von Videosignaldaten für einen Bildblock, umfassend den Schritt der Filterung eines im Abtastwert verminderten Vorhersagerestes des Bild blocks mit niedriger Auflösung , gebildet durch Abtastwertverminderung eines Vorhersagerestes mit voller Auflösung unter Verwendung von Daten aus wenigstens einem benachbarten Bildblock, um einen gefilterten Vorhersagerest zu bilden, ohne eine Vorhersage zu filtern. die dem gefilterten Vorhersagerest hinzugefügt wird, um den Bildblock zu rekonstruieren.

20. Verfahren nach Anspruch 19, das ferner den Schritt der Verminderung einer blockierenden Verzerrung in einer rekonstruierten Version des Bildblocks unter Verwendung eines Entblockungsfilters umfasst (762), wobei das Entblockungsfilter mit einer Stärke verwendet wird, die kleiner ist als eine maximale Entblockungsstärke.

21. Videosignalstruktur für einen kodierten Bildblock, umfassend einen Vorhersagerest mit geringer Auflösungsvorhersage des Bildblocks, der von einer vollen Auflösungsvorhersage unter Verwendung von Daten aus wenigstens einem benachbarten Bildblock im Abtastwert vermindert wurde.

## Revendications

1. Un appareil permettant de coder des données de signal vidéo pour un bloc d'images, comprenant un sous-échantillonneur de mise à jour de résolution réduite (515),
dans lequel ledit sous-échantillonneur de mise à jour de résolution réduite (515) sous-échantillonne un résidu de prédiction de pleine résolution en utilisant des données provenant d'au moins un bloc d'images voisin pour former un résidu de prédiction sous-échantillonné de faible résolution pour le bloc d'images.

2. L'appareil selon la revendication 1, comprenant en outre un interpolateur (563) de mise à jour de résolution réduite,
dans lequel ledit interpolateur de mise à jour de résolution réduite (563) interpole un résidu de prédiction de faible résolution, codé en utilisant des données provenant d'au moins un bloc d'images voisin pour former un résidu de prédiction interpolé codé pour le bloc d'images.

3. L'appareil selon la revendication 2, dans lequel ledit interpolateur de mise à jour de résolution réduite (563) utilise des pixels reconstruits des parties supérieure et gauche du bloc d'images pour l'interpolation.

4. L'appareil selon la revendication 2, dans lequel ledit interpolateur de mise à jour de résolution réduite (563) interpole sans utiliser des pixels reconstruits à droite et en bas du bloc d'images.

5. L'appareil selon la revendication 2, comprenant en outre un filtre anti-blocs (567) pour réduire la distorsion de blocs dans une version reconstruite du bloc d'images, dans lequel le filtre anti-blocs est utilisé à une force inférieure à une force anti-blocs maximum.

6. Un appareil permettant de coder des données de signal vidéo pour un bloc d'images, comprenant un interpolateur de mise à jour de résolution réduite (563) permettant d'interpoler un résidu de prédiction de faible résolution, codé en utilisant des données provenant d'au moins un bloc d'images voisin afin de former un résidu de prédiction interpolé codé pour le bloc d'images dans lequel certains des résidus de prédiction interpolés codés sont alignés dans l'espace avec certains des résidus de prédiction de faible résolution codés.

7. L'appareil selon la revendication 6, dans lequel ledit interpolateur de mise à jour de résolution réduite (563) utilise des pixels reconstruits des parties supérieure et gauche du bloc d'images pour l'interpolation.

8. L'appareil selon la revendication 6, dans lequel ledit interpolateur de mise à jour de résolution réduite (563) interpole sans utiliser de pixels reconstruits à droite et en bas du bloc d'images.

9. L'appareil selon la revendication 6, comprenant en outre un filtre anti-blocs (567) permettant de réduire la distorsion de blocs dans une version reconstruite du bloc d'images, dans lequel le filtre anti-blocs est utilisé à une force qui est inférieure à une force anti-blocs maximum.

10. Un appareil permettant de décoder des données de signal vidéo pour un bloc d'images, comprenant un interpolateur de mise à jour de résolution réduite (635) pour filtrer un résidu de prédiction sous-échantillonné de faible résolution du bloc d'images, formé par un sous-échantillonnage d'un résidu de prédiction de pleine résolution en utilisant des données provenant d'au moins un bloc d'images voisin pour former un résidu de prédiction filtré, sans filtrer une prédiction qui est ajoutée au résidu de prédiction filtré afin de reconstruire le bloc d'images.

11. L'appareil selon la revendication 10, comprenant en outre un filtre anti-blocs (645) permettant de réduire la distorsion de blocs dans une version reconstruite du bloc d'images,
dans lequel le filtre anti-blocs est utilisé à une force inférieure à celle d'une force anti-blocs maximum.

12. Un procédé permettant de coder des données de signal vidéo pour un bloc d'images, comprenant l'étape consistant à effectuer un sous-échantillonnage (735) de mise à jour de résolution réduite afin de sous-échantillonner un résidu de prédiction de résolution complète en utilisant des données provenant d'au moins un bloc d'images pour former un résidu de prédiction sous-échantillonné de faible résolution pour le bloc d'images.

13. Le procédé selon la revendication 12, comprenant en outre l'étape qui consiste à effectuer une étape d'interpolation de mise à jour de résolution réduite (755) pour interpoler un résidu de prédiction codé en utilisant des données provenant d'au moins un autre bloc d'images voisin afin de former un résidu de prédiction interpolé codé pour le bloc d'images.

14. Le procédé selon la revendication 13, dans lequel ladite étape d'interpolation de mise à jour de résolution réduite (755) utilise des pixels reconstruits dans les parties supérieure et gauche du bloc d'images pour l'interpolation.

15. Le procédé selon la revendication 13, dans lequel ladite étape d'interpolation de mise à jour de résolution réduite (755) effectue l'interpolation sans utiliser les pixels reconstruits à droite et en bas du bloc d'images.

16. Le procédé selon la revendication 12, comprenant en outre l'étape de réduction (762) de distorsion de blocs dans une version reconstruite du bloc d'images en utilisant un filtre anti-blocs, dans lequel le filtre anti-blocs est utilisé à une force inférieure à une force anti-blocs.

17. Un procédé permettant de coder des données de signal vidéo pour un bloc d'images, comprenant l'étape consistant à effectuer une interpolation de mise à jour de résolution réduite (755), permettant d'interpoler un résidu de prédiction de faible résolution, codé en utilisant des données provenant d'au moins un bloc d'images voisin afin de former un résidu de prédiction interpolé codé pour le bloc d'images dans lequel certains des résidus de prédiction interpolés codés sont alignés dans l'espace avec certains des résidus de prédiction de faible résolution codés.

18. Le procédé selon la revendication 17, comprenant en outre l'étape de réduction (762) de la distorsion de blocs dans une version reconstruite du bloc d'images en utilisant un filtre anti-blocs, dans lequel le filtre anti-blocs est utilisé à une force inférieure à une force anti-blocs maximum.

19. Un procédé permettant de décoder des données de signal vidéo pour un bloc d'images, comprenant l'étape de filtrage d'un résidu de prédiction sous-échantillonné de faible résolution du bloc d'images, formé par le sous-échantillonnage d'un résidu de prédiction de plein résolution en utilisant des données provenant d'au moins un bloc d'images voisin pour former un résidu de prédiction filtré, sans filtrer une prédiction qui est ajoutée au résidu de prédiction filtré afin de reconstruire le bloc d'images.

20. Le procédé selon la revendication 19, comprenant en outre l'étape de réduction (762) de la distorsion de blocs dans une version reconstruite du bloc d'images en utilisant un filtre anti-blocs, dans lequel le filtre anti-blocs est utilisé à une force inférieure à une force anti-blocs maximum.

21. Une structure de signal vidéo pour un bloc d'images codé comprenant un résidu de prédiction de faible résolution du bloc d'images sous-échantillonné provenant d'un résidu de prédiction de pleine résolution en utilisant des données provenant d'au moins un bloc d'images voisin.
